# EUROPEAN PATENT SPECIFICATION

(11) **EP 3 837 649 B1**
(45) Date of publication and mention of the grant of the patent: **15.11.2023**
(21) Application number: 19759247.0
(22) Date of filing: 13.08.2019
(51) Int. Cl.: G06Q 10/087, G06Q 10/0832

(54) **MONITORING SYSTEM FOR CONTAINER SYSTEMS**
ÜBERWACHUNGSSYSTEM FÜR CONTAINERSYSTEME
SYSTÈME DE SURVEILLANCE DESTINÉ À DES SYSTÈMES DE CONTENEUR

(30) Priority: 14.08.2018 IN 201811030579
(43) Date of publication of application: 23.06.2021
(73) Proprietor: Carrier Corporation, Palm Beach Gardens, FL 33418 (US)
(72) Inventor: GUPTA, Ankit Anand, Hootagalli Mysuru 570018 (IN); ANUP, Kumar, Hootagalli Mysuru 570018 (IN); CHOPKO, Robert A., New York 13027 (US); OGGIANU, Stella M., Farmington, Connecticut 06032 (US)
(74) Representative: Dehns
(86) International application number: PCT/US2019/046290
(87) International publication number: WO 2020/036924

(56) References cited:
- WO-A1-2018/017825
- US-A1- 2007 268 138

## Description

Products such as produce or meat may be shipped relatively long distances and may be placed within refrigerated containers. Monitoring of packed food items inside a refrigerated container may not be real time and individual sensors may need batteries for powering. Battery powered sensors within the refrigerated container may have limited life and reduced performance at low temperatures. These battery powered sensors may also be costly.

US 2007/268138 A1 discloses a method of tracking objects such as containers by using RFID devices associated with the object, and a network of relays to detect an RFDI device within an area.

WO 2018/017825 A1 discloses a method of monitoring cargo container parameters using sensors and a controller, where individual cargo can be identified with an RFID tag.

According to a first aspect there is provided a container system that includes a container and a monitoring system. The container defines an interior space that is arranged to receive cargo. The monitoring system comprising a power transmitter and a sensor tag. The power transmitter is disposed in the interior space of the container. The sensor tag is disposed on the cargo is arranged to provide a signal indicative of a condition of at least one of the cargo and interior space responsive to receiving power from the power transmitter. The sensor tag includes a power receiver that is arranged to receive power from the power transmitter; a sensor that is arranged to monitor the condition of at least one of the cargo and interior space and provide the signal to the power transmitter, the sensor being powered by the received power; an antenna; wherein the power receiver is arranged to receive power from the power transmitter through the antenna; wherein the sensor is in communication with at least one of the antenna and the power receiver, the sensor being arranged to provide the signal indicative of a condition of at least one of the cargo and interior space, responsive to receiving power from the power receiver; an energy storage device arranged to store power that is received from the power transmitter; and a controller programmed to manage power between the energy storage device and the sensor.

Example embodiments are provided with a monitoring system for a container system that includes a sensor tag. The sensor tag comprises an antenna, a power receiver, and a sensor. The power receiver is arranged to receive power from the power transmitter through the antenna. The sensor being in communication with at least one of the antenna and the power receiver. The sensor is arranged to provide a signal indicative of a condition of at least one of the cargo and interior space, responsive to receiving power from the power receiver.

These and other advantages and features will become more apparent from the following description taken in conjunction with the drawings.

The subject matter which is regarded as the invention of the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a perspective view of a container system ; and
FIG. 2 is a schematic view of a sensor tag provided with the container system.

Referring now to the Figures, where the present disclosure will be described with reference to specific embodiments, without limiting same, it is to be understood that the disclosed embodiments are merely illustrative of the present disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

Referring to the Figures, a cargo box or a container system 10, such as a refrigerated container or a refrigerated trailer, may be provided with a refrigeration unit that provides conditioned air or cooled air to an interior space 12 of the container system 10. The conditioned air may be conditioned by varying oxygen, carbon dioxide, or ethylene levels or the varying or control of ventilation, temperature, or humidity. The conditioned air or cooled air may be distributed about the interior space 12 by a fan 14 of the refrigeration unit. The interior space 12 is arranged to receive cargo 16, such as sealed containers or other storage devices disposed on a pallet, which may contain goods that are preserved by the provision of conditioned air by the refrigeration system.

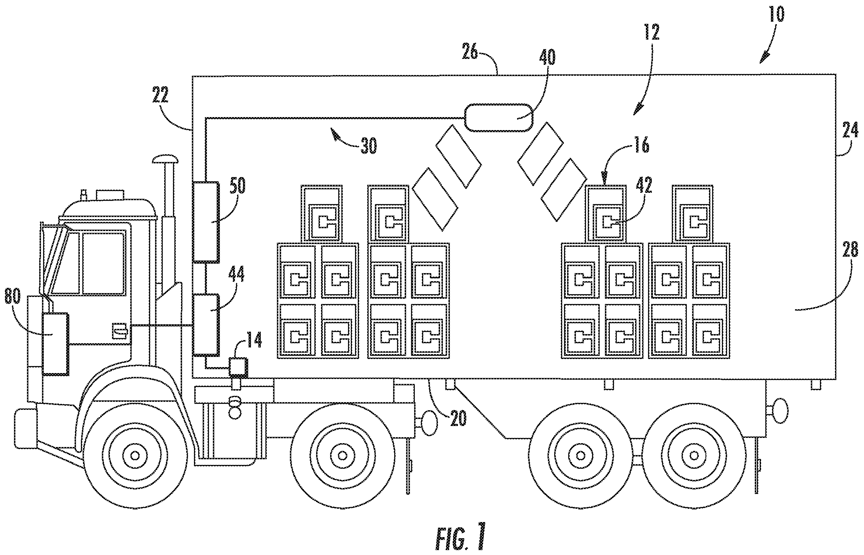

Referring to FIG. 1, the interior space 12 of the container system 10 is defined by a floor 20, a front wall 22, a rear wall 24, a top wall 26, and a pair of side walls 28. The floor 20 extends between proximal ends of the front wall 22, the rear wall 24, and the pair of side walls 28. The floor 20 is spaced apart from and is disposed opposite the top wall 26. The front wall 22 extends between first ends of the floor 20 and the top wall 26. The rear wall 24 is disposed opposite the front wall 22 and extends between second ends of the floor 20 and the top wall 26. The rear wall 24 may define a door that selectively permits access to the interior space 12, however the door may also be defined within or by other walls of the container system 10. The top wall 26 may be a roof or ceiling of the container system 10. The top wall 26 extends between distal ends of the front wall 22, the rear wall 24, and the pair of side walls 28. The top wall 26 is disposed opposite the floor 20. The pair of side walls 28 extend between the floor 20 and the top wall 26 and the pair of side walls 28 extend between the front wall 22 and the rear wall 24.

The cargo 16 may include products such as food items or other items that may be monitored to assure that the products are adequately preserved. Presently, the monitoring of items inside a container may not be real-time and may employ batteries that may have limited life and reduced performance at the lower temperatures within a refrigerated container. The container system 10 includes a monitoring system 30 that provides real-time monitoring of the condition of the cargo 16 and/or the condition of the environment within the interior space 12. The monitoring system 30 includes a power transmitter 40, a sensor tag 42, and a controller 44.

The power transmitter 40 is be disposed within the interior space 12 of the container system 10. The power transmitter 40 may be disposed on the top wall 26 of the container system 10 to provide maximal coverage of the interior space 12. The power transmitter 40 is arranged to receive power from a power supply 50 that is in communication with the controller 44. The power supply 50 may be a DC power supply.

The power transmitter 40 may be arranged to create a RF field to provide power to the sensor tag 42 and is arranged to transmit information to and receive information from the sensor tag 42 wirelessly. The power provided by the power transmitter 40 to the sensor tag 42 avoids the sensor tag 42 from requiring a battery. The power provided by the power transmitter 40 may be a RF field that powers the sensor tag 42. The power transmitter 40 may also be provided with an antenna or other receiver that is arranged to receive and/or transmit data, information, or a signal to/from the sensor tag 42. The power transmitter 40 may transmit the data, information, or the signal from the sensor tag 42 to a display interface or to a remote server through a communication network.

The sensor tag 42 is disposed on the cargo 16. The sensor tag 42 may be a plug-and-play unit that is placed within a container or package that may constitute the cargo 16. The sensor tag 42 may be arranged as a RF power receiver, an energy storage device, a parameter monitor, and a wireless communication device. The sensor tag 42 may also be an actuator or any device requiring power.

The sensor tag 42 is in wireless communication with the power transmitter 40 and/or the controller 44. Multiple sensor tags may be powered by the power transmitter 40 and the multiple sensor tags may provide signals that are received by the power transmitter 40 and/or the controller 44. Each signal may include a unique identifier as to which item(s) of the cargo 16 are associated with each signal. In such an arrangement, the sensor tags 42 provide real-time information as to the condition of individual items of the cargo 16 or the environment proximate individual items of the cargo 16.

The sensor tag 42 is arranged to provide a signal indicative of a condition of at least one of the cargo 16 upon which the sensor tag 42 is disposed and the interior space 12, responsive to receiving power from the power transmitter 40. The condition of at least one of the cargo 16 and the interior space 12 may be a cargo temperature, a temperature of the interior space 12 proximate the cargo 16, humidity within the interior space 12, a concentration of a refrigerant within the interior space 12, a concentration of at least one of ethylene, carbon dioxide (CO2), and oxygen (O2) within the interior space 12, as well as other parameters or measurable values.

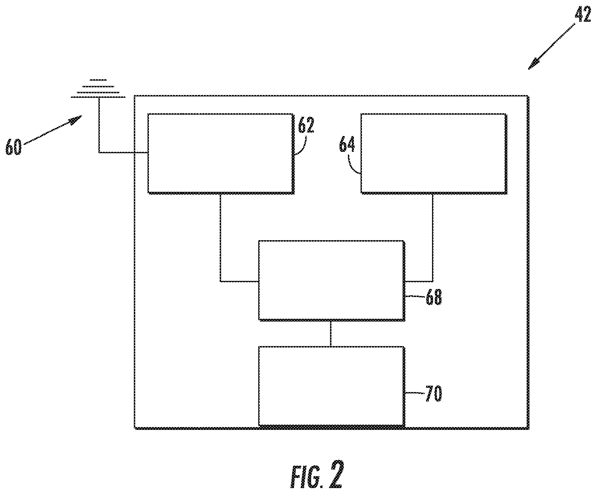

Referring to FIG. 2, the sensor tag 42 includes an antenna 60, a power receiver 62, and a sensor 64. The antenna 60, the power receiver 62, and the sensor 64 may all be disposed within a sensor tag housing 66.

The antenna 60 may be a wireless communication device that is arranged to receive power from the power transmitter 40, direct the power to the power receiver 62, and transmit a signal back to the power transmitter 40 and/or the controller 44. The antenna 60 is also arranged to provide the signal from the sensor 64 to the power transmitter 40, responsive to the power receiver 62 receiving power from the power transmitter 40 through the antenna 60. The antenna 60 may be at least partially disposed within the sensor tag housing 66 or may extend from the sensor tag housing 66.

The power receiver 62 is arranged to receive power from the power transmitter 40 through the antenna 60. The power receiver 62 is arranged to provide power to the sensor 64. The power receiver 62 may be a RF power receiver that receives RF power from the power transmitter 40. However, other forms of wireless power transmission are also contemplated besides RF power. For example, the power receiver 62 may be arranged as an energy harvesting device that is arranged to harvest electromagnetic energy from the fan 14.

In such an arrangement, the antenna 60 and the power receiver 62 define a remotely powered communication system. The remotely powered communication system provides communication, sensing, and actuating functionality responsive to receiving power from a remote power source, e.g. the power transmitter 40, without an internal power source. The remotely powered communication system enables the sensor tag 42 to be robust and less influenced by the environment within the interior space 12.

The sensor 64 is in communication with and is connected to at least one of the antenna 60 and the power receiver 62. The sensor 64 is arranged to monitor the condition of at least one of the cargo 16 and the interior space 12. The power received by the sensor 64 enables the sensor 64 to sense, communicate, and/or actuate. The sensor 64 may be provided as a plurality of sensors or a sensor array that is arranged to monitor various conditions or parameters.

The sensor tag 42 is provided with a controller 68. The controller 68 may be in communication with the antenna 60, the power receiver 62, and the sensor 64. The controller 68 may be disposed within the sensor tag housing 66. The controller 68 is arranged to manage power delivery between the sensor 64 and the power receiver 62 and communications between the power receiver 62 and the sensor 64. The controller 68 may control the timing of communications of the sensor 64.

The controller 68 or the controller 44 may include memory to store and process sensor data or information. The information communicated may be data from the sensor 64 or data that may have been pre-processed locally.

The controller 68 may include memory to store data should the power be less than a threshold, and store the monitored parameters associated with the signal until sufficient power is available to transmit the data/signal to the power transmitter 40 and/or the controller 44 or may transmit the signal to a remote server. The controller 68 may be provided with analytics to make decisions based on the sensor data. The controller 68 is also arranged to manage power delivery between an energy storage device 70 and the sensor 64. The energy storage device 70 is arranged to store at least a portion of the power that is received from the power transmitter 40 and may deliver a portion of the power to the sensor 64.

The controller 44 may be provided as part of the refrigeration unit or may be provided as a separate controller that is in communication with the power transmitter 40, the power supply 50, and/or the fan 14. The controller 44 is provided with input communication channels that are arranged to receive the signal from the sensor tag 42, via the power transmitter 40. The controller 44 is provided with output communication channels that are arranged to provide signals or commands to the power transmitter 40 to provide power to the sensor tag 42 responsive to a request to monitor or assess the condition of at least one of the cargo 16 and the interior space 12. The output communication channels of the controller 44 are arranged to output for display an indicator, via a display interface 80, indicative of the condition of at least one of the cargo 16 and the interior space 12. The display interface 80 may be remotely located from the refrigerated container.

The controller 44 is provided with at least one processor that is programmed to perform control logic, control algorithms, or functions to command the power transmitter 40 to provide power to the sensor tag 42, as well as to interpret or display information associated with the signal provided by the sensor tag 42.

In at least one embodiment, controller 44 is arranged to query as to the presence of cargo 16 within the interior space 12. Should the power transmitter 40 attempt to provide power to the sensor tag 42 and no signal is received by the power transmitter 40 from the sensor tag 42, the controller 44 is programmed to output for display an indicator, indicative of the absence of cargo 16 within the interior space 12. If the power transmitter 40 attempts to provide power to the sensor tag 42 and a signal is received by the power transmitter 40 from the sensor tag 42, the controller 44 is programmed to output for display an indicator, indicative of the presence of cargo 16 within the interior space 12 and/or the condition of the cargo 16.

The monitoring system 30 provides an improved method of sensing inside the cargo 16. The monitoring system 30 enables remote access to the real-time data provided by the sensor tag 42 while also being robust to the environment within the interior space 12.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are within the scope of the claims. Accordingly, the present invention is not to be seen as limited by the foregoing description, but instead the invention is defined by the following claims.

## Claims

1. A container system (10), comprising:
a container defining an interior space (12) that is arranged to receive cargo (16); and
a monitoring system (30);
the monitoring system (30) comprising:
a power transmitter (40) disposed in the interior space (12) of the container; and
a sensor tag (42) disposed on the cargo (16), the sensor tag (42) being arranged to provide a signal indicative of a condition of at least one of the cargo (42) and interior space (12) responsive to receiving power from the power transmitter (40);
wherein the sensor tag (42) includes:
a power receiver (62) that is arranged to receive power from the power transmitter (40);
a sensor (64) that is arranged to monitor the condition of at least one of the cargo (16) and interior space (12) and provide the signal to the power transmitter (40), wherein the sensor (64) is powered by the received power; and
an antenna (60),
wherein the power receiver (62) is arranged to receive power from the power transmitter (40) through the antenna (60);
**characterized in that**:
the sensor (64) is in communication with at least one of the antenna (60) and the power receiver (62), the sensor being arranged to provide the signal indicative of a condition of at least one of the cargo (16) and interior space (12), responsive to receiving power from the power receiver (62); and
the sensor tag (42) includes:
an energy storage device (70) arranged to store power that is received from the power transmitter (40); and
a controller (68) programmed to manage power between the energy storage device (70) and the sensor (64).

2. The container system (10) of claim 1, wherein the condition of at least one of the cargo (16) or interior space (12) is cargo temperature, a temperature of the interior space proximate the cargo, humidity, concentration of a refrigerant within the interior space, a concentration of at least one of ethylene, carbon dioxide, and oxygen within the interior space.

3. The container system (10) of claim 1, further comprising:
a refrigeration unit having a controller (44) that is in communication with at least one of the power transmitter (40) and the sensor tag (42).

4. The container system (10) of claim 3, wherein the power transmitter (40) is arranged to at least one of transmit RF power and receive the signal.

5. The container system (10) of claim 1, wherein the sensor tag (42) further includes a controller (68) that is programmed to store monitored parameters associated with the signal.

6. The container system (10) of claim 3, wherein the refrigeration unit has a fan (14) that is arranged to direct conditioned air into the interior space (12).

7. The container system of any preceding claim, wherein the antenna (60) is arranged to provide the signal to the power transmitter (40), responsive to the power receiver (62) receiving power from the power transmitter (40).

8. The container system of any preceding claim, wherein the monitoring system further comprises:
a controller (44) in communication with the power transmitter (40).

9. The container system of claim 8, wherein the controller (44) is programmed to command the power transmitter (40) to provide power to the sensor tag (42).

10. The container system of claim 9, wherein the controller (44) is programmed to output for display an indicator indicative of the condition of at least one of the cargo (16) and interior space (12), via a display interface, responsive to the power transmitter (40) receiving the signal.

## Patentansprüche

1. Containersystem (10), Folgendes umfassend:
einen Container, der einen Innenraum (12) definiert, der zur Aufnahme von Fracht (16) angeordnet ist; und
ein Überwachungssystem (30);
wobei das Überwachungssystem (30) Folgendes umfasst:
einen Stromsender (40), der in dem Innenraum (12) des Containers angeordnet ist; und
ein Sensoretikett (42), das an der Fracht (16) angeordnet ist, wobei das Sensoretikett (42) eingerichtet ist, um als Antwort auf das Empfangen von Strom von dem Stromsender (40) ein Signal bereitzustellen, das einen Zustand von mindestens einem von der Fracht (42) und des Innenraums (12) angibt;
wobei das Sensoretikett (42) Folgendes beinhaltet:
einen Stromempfänger (62), der so angeordnet ist, dass er Strom von dem Stromsender (40) empfängt;
einen Sensor (64), der angeordnet ist, um den Zustand von mindestens einem von der Fracht (16) und des Innenraums (12) zu überwachen und das Signal dem Stromsender (40) bereitzustellen, wobei der Sensor (64) mit dem empfangenen Strom versorgt wird; und
eine Antenne (60),
wobei der Stromempfänger (62) angeordnet ist, um über die Antenne (60) Strom von dem Stromsender (40) zu empfangen;
**dadurch gekennzeichnet, dass**:
der Sensor (64) mit mindestens einem von der Antenne (60) und
dem Stromempfänger (62) in Verbindung steht, wobei der Sensor angeordnet ist, um als Antwort auf das Empfangen von Strom von dem Stromempfänger (62) das Signal bereitzustellen, das einen Zustand von mindestens einem von der Fracht (16) und des Innenraums (12) angibt; und
das Sensoretikett (42) Folgendes beinhaltet:
eine Energiespeichervorrichtung (70), die angeordnet ist, um von dem Stromsender (40) empfangenen Strom zu speichern; und
eine Steuerung (68), die programmiert ist, um den Strom zwischen der Energiespeichervorrichtung (70) und dem Sensor (64) zu regeln.

2. Containersystem (10) nach Anspruch 1, wobei der Zustand von mindestens einem von der Fracht (16) oder des Innenraums (12) Frachttemperatur, eine Temperatur des Innenraums in der Nähe der Fracht, Feuchtigkeit, Konzentration eines Kältemittels innerhalb des Innenraums, eine Konzentration von mindestens einem von Ethylen, Kohlendioxid und Sauerstoff innerhalb des Innenraums ist.

3. Containersystem (10) nach Anspruch 1, ferner Folgendes umfassend:
eine Kühleinheit, die eine Steuerung (44) aufweist, die in Verbindung mit mindestens einem von dem Stromsender (40) und dem Sensoretikett (42) steht.

4. Containersystem (10) nach Anspruch 3, wobei der Stromsender (40) mindestens für eines von Senden von HF-Strom und Empfangen des Signals angeordnet ist.

5. Containersystem (10) nach Anspruch 1, wobei das Sensoretikett (42) ferner eine Steuerung (68) beinhaltet, die programmiert ist, um überwachte Parameter zu speichern, die mit dem Signal verknüpft sind.

6. Containersystem (10) nach Anspruch 3, wobei die Kühleinheit einen Lüfter (14) aufweist, der angeordnet ist, um klimatisierte Luft in den Innenraum (12) zu richten.

7. Containersystem nach einem der vorhergehenden Ansprüche, wobei die Antenne (60) angeordnet ist, um das Signal an den Stromsender (40) bereitzustellen, als Antwort auf das Empfangen von Strom von dem Stromsender (40) durch den Stromempfänger (62) .

8. Containersystem nach einem der vorhergehenden Ansprüche, wobei das Überwachungssystem ferner Folgendes umfasst:
eine Steuerung (44), die in Verbindung mit dem Stromsender (40) steht.

9. Containersystem nach Anspruch 8, wobei die Steuerung (44) programmiert ist, um den Stromsender (40) zu befehlen, Strom für das Sensoretikett (42) bereitzustellen.

10. Containersystem nach Anspruch 9, wobei die Steuerung (44) programmiert ist, um über eine Anzeigeschnittstelle als Antwort auf das Empfangen des Signals von dem Stromsender (40) einen Indikator zur Darstellung auszugeben, der den Zustand von mindestens einem von der Fracht (16) und des Innenraums (12) angibt.

## Revendications

1. Système de conteneur (10) comprenant :
un conteneur définissant un espace intérieur (12) qui est agencé pour recevoir une cargaison (16) ; et
un système de surveillance (30) ;
le système de surveillance (30) comprenant :
un émetteur d'énergie (40) disposé dans l'espace intérieur (12) du conteneur ; et
une étiquette de capteur (42) disposée sur la cargaison (16),
l'étiquette de capteur (42) étant conçue pour fournir un signal indiquant un état d'au moins l'un de la cargaison (42) et de l'espace intérieur (12) en réponse à la réception d'énergie en provenance de l'émetteur d'énergie (40) ;
dans lequel l'étiquette de capteur (42) comporte :
un récepteur d'énergie (62) qui est agencé pour recevoir de l'énergie en provenance de l'émetteur d'énergie (40) ;
un capteur (64) qui est agencé pour surveiller l'état d'au moins l'un de la cargaison (16) et de l'espace intérieur (12) et fournir le signal à l'émetteur d'énergie (40), dans lequel le capteur (64) est alimenté par l'énergie reçue ; et
une antenne (60),
dans lequel le récepteur d'énergie (62) est agencé pour recevoir de l'énergie en provenance de l'émetteur d'énergie (40) à travers l'antenne (60) ;
**caractérisé en ce que** :
le capteur (64) est en communication avec au moins l'un de l'antenne (60) et du récepteur d'énergie (62), le capteur étant conçu pour fournir le signal indiquant un état d'au moins l'un de la cargaison (16) et de l'espace intérieur (12), en réponse à la réception d'énergie en provenance du récepteur d'énergie (62) ; et
l'étiquette de capteur (42) comporte :
un dispositif de stockage d'énergie (70) conçu pour stocker l'énergie qui est reçue en provenance de l'émetteur d'énergie (40) ; et
un dispositif de commande (68) programmé pour gérer l'énergie entre le dispositif de stockage d'énergie (70) et le capteur (64) .

2. Système de conteneur (10) selon la revendication 1, dans lequel l'état d'au moins l'un de la cargaison (16) ou de l'espace intérieur (12) est la température de la cargaison, une température de l'espace intérieur à proximité de la cargaison, l'humidité, la concentration d'un réfrigérant dans l'espace intérieur, une concentration d'au moins l'un de l'éthylène, du dioxyde de carbone et de l'oxygène dans l'espace intérieur.

3. Système de conteneur (10) selon la revendication 1, comprenant également :
une unité de réfrigération ayant un dispositif de commande (44) qui est en communication avec au moins l'un de l'émetteur d'énergie (40) et de l'étiquette de capteur (42).

4. Système de conteneur (10) selon la revendication 3, dans lequel l'émetteur d'énergie (40) est agencé pour au moins transmettre l'énergie RF et recevoir le signal.

5. Système de conteneur (10) selon la revendication 1, dans lequel l'étiquette de capteur (42) comporte également un dispositif de commande (68) qui est programmé pour stocker les paramètres surveillés associés au signal.

6. Système de conteneur (10) selon la revendication 3, dans lequel l'unité de réfrigération a un ventilateur (14) qui est agencé pour diriger l'air conditionné dans l'espace intérieur (12) .

7. Système de conteneur selon une quelconque revendication précédente, dans lequel l'antenne (60) est agencée pour fournir le signal à l'émetteur d'énergie (40), en réponse à la réception de l'énergie en provenance de l'émetteur d'énergie (40) par le récepteur d'énergie (62).

8. Système de conteneur selon une quelconque revendication précédente, dans lequel le système de surveillance comprend également :
un dispositif de commande (44) en communication avec l'émetteur d'énergie (40).

9. Système de conteneur selon la revendication 8, dans lequel le dispositif de commande (44) est programmé pour ordonner à l'émetteur d'énergie (40) de fournir de l'énergie à l'étiquette de capteur (42).

10. Système de conteneur selon la revendication 9, dans lequel le dispositif de commande (44) est programmé pour émettre, pour affichage, un indicateur indiquant l'état d'au moins l'un de la cargaison (16) et de l'espace intérieur (12), par l'intermédiaire d'une interface d'affichage, en réponse à la réception du signal par l'émetteur d'énergie (40).
